Europäisches Patentamt

European Patent Office

Office européen des brevets

(11) Veröffentlichungsnummer: **0 189 845**

**B1**

(12) **EUROPÄISCHE PATENTSCHRIFT**

(45) Veröffentlichungstag der Patentschrift: 09.05.90

(21) Anmeldenummer: 86100888.6

(22) Anmeldetag: 23.01.86

(51) Int. Cl.⁵: **B 29 C 67/20, B 29 B 7/74,
B 01 F 13/02, C 09 D 175/04**

(54) **Verfahren zum Herstellen von zelligen oder kompakten Kunststoffen aus mindestens zwei miteinander reagierenden Komponenten.**

(30) Priorität: 30.01.85 DE 3502938

(43) Veröffentlichungstag der Anmeldung:
06.08.86 Patentblatt 86/32

(45) Bekanntmachung des Hinweises auf die
Patenterteilung:
09.05.90 Patentblatt 90/19

(84) Benannte Vertragsstaaten:
AT BE CH DE FR GB IT LI NL SE

(56) Entgegenhaltungen:
EP-A-0 038 463

(73) Patentinhaber: Elastogran GmbH
Postfach 1140
D-2844 Lemförde (DE)

(72) Erfinder: Roche, Peter
Daglfinger Strasse 22
D-8000 München 81 (DE)
Erfinder: Rank, Mathaeus
Dahlienweg 3
D-8037 Olching/Neu-Esting (DE)

(74) Vertreter: Mutzbauer, Helmut, Dr. et al
BASF Aktiengesellschaft Patentabteilung ZSP-C
6 Carl-Bosch-Strasse 38
D-6700 Ludwigshafen (DE)

Courier Press, Leamington Spa, England.

**Beschreibung**

Die Erfindung bezieht sich auf ein Verfahren nach den Oberbegriffen der Ansprüche 1 und 4.

Bei den bekannten Verfahren werden die Reaktionskomponenten in der Regel gegeneinander gerichtet in eine Mischkammer eingespritzt. Dabei muß für jede Komponente eine besondere Einlaßdüse vorhanden sein. Verfahrenstechnisch gesehen entstehen Nachteile beim Vermischen, wenn eine der Komponenten gegenüber der anderen in relativ geringer Menge eingespritzt wird oder wenn die Verdüsungsdrucke sehr unterschiedlich sind.

Weiterhin ist es bekannt, daß die Mischfreudigkeit von Mehrkomponenten-Kunststoffen durch fein verteilte Luft erhöht wird. Um dieses zu erreichen, ist es bereits vorgeschlagen worden, Luft unmittelbar in die Mischkammer einzugeben. Auch ist es schon vorgeschlagen worden, den Vorratsbehältern Luft zur Vermischung mit der entsprechenden Komponente zuzuführen.

Wenn die Luft in die Komponente in dem Vorratsbehälter eingeführt wird, erfolgt sehr schnell eine Entmischung, so daß das Eingeben der Luft im wesentlichen ohne Wirkung bleibt. Die Zugabe von Luft direkt in die Mischkammer befriedigt ebenfalls nicht in jeder Hinsicht, da hierbei häufig ein unruhiger oder zerstäubender Strahlaustritt aus der Mischkammer entsteht. Dieses ist zum genauen Gießen oder Beschichten von insbesondere senkrecht stehenden Flächen nachteilig.

Die Beschichtung von Formkörpern mit Polyurethanen ist ebenfalls aus zahlreichen Publikationen bekannt. Hierzu können beispielsweise heißschmelzbare Polyurethan-Elastomerpulver auf elektrostatischem Weg auf die Innenfläche eines Formwerkzeugs aufgebracht werden oder das Formwerkzeug wird auf die Schmelztemperatur des Elastomeren erwärmt, um eine Polyurethanschicht zu erhalten. Nach einer anderen Methode werden Polyurethanfolien in das Formwerkzeug eingelegt und falls notwendig mittels Vakuum an der Formwerkzeugoberfläche fixiert. Die reaktionsfähige Polyurethanmischung wird in das so vorbehandelte Formwerkzeug eingebracht und in der geschlossenen Form aushärten gelassen.

Es sind ferner Verfahren bekannt, bei denen die innere Oberfläche des Formwerkzeugs mit einer Zweikomponenten-Polyurethan-Formulierung besprüht wird. Hierbei dauert es einige Minuten bis ein ausgehärteter Film gebildet wird. Nachteilig ist, daß die Polyurethanmischung an den senkrechten Flächen, scharfen Ecken oder abgeflachten Kanten abfließen kann, sofern keine äußere Kraft einwirkt, bevor sie genügend ausgehärtet ist. Ähnliche Verhältnisse liegen vor, wenn die Polyurethanmischung zur Erzielung einer niederviskosen, versprühbaren Mischung mit inerten Lösungsmitteln verdünnt oder die unverdünnte Polyurethanmischung nach der Hochdrucksprühtechnik ohne Luft aufgebracht wird.

Zur Beseitigung dieses Nachteils wurde vorgeschlagen, den Polyurethanmischungen Thixotropierungsmittel, wie z.B. Siliciumdioxid, Polyamide oder Polyacrylamide, einzuverleiben. Dadurch kann jedoch der Verlauf des Films beeinträchtigt werden, was zur Bildung von porösen oder streifigen Oberflächen führt. Nach Angaben der DE—OS—29 32 315 (US—4 294 880) werden der Polyurethan-Zusammensetzung zur Thixotropierung primäre aliphatische Diamine einverleibt. Eine lichtechte Polyurethan-Außenhaut mit einer Schichtdicke von mindestens 0.5 mm, die relativ rasch aushärtet, wird gemäß DE—OS—30 14 161 (US—4 389 454) erhalten durch Umsetzung von aliphatischen Polyisocyanaten mit einer Mischung aus höhermolekularen Polyhydroxylverbindungen, niedermolekularen Kettenverlängerungsmitteln und aliphatischen und/oder cycloaliphatischen primären oder sekundären Diaminen in Gegenwart von vorzugsweise speziellen synergistisch wirkenden Katalysatorkombinationen. Das letztgenannte Verfahren ergibt gute lichtechte Polyurethan-Überzüge, es ist jedoch empfindlich und bedarf einer sehr anspruchsvollen Verarbeitung.

Zum Versprühen von Zweikomponenten-Polyurethan-Systemen stehen im wesentlichen zwei Verfahren zur Verfügung.

Beim sogenannten Airless-Verfahren werden die Aufbaukomponenten im Hochdruck-Verfahren im Gegenstrom oder mittels eines statischen Mischrohres vermischt und über Düsen unter hohem Druck zerstäubt.

Bei der sogenannten Luftverdüsung werden die Ausgangsstoffe im Niederdruck-Verfahren in statischen Mischrohren oder mit mechanischen Rührern in einer Mischkammer vermischt. Beim Austrag aus der Düse wird das Komponentengemisch mit Luft versetzt und dadurch zerstäubt. Da die Verweilzeit des Komponentengemisches in der Mischkammer relativ lang ist, muß die Topfzeit des Reaktionsgemisches entsprechend lang eingestellt werden, um ein teilweises Ausreagieren des Gemisches in der Mischkammer zu verhindern.

Um eine optimale Vermischung in der Mischkammer zu erzielen und eine gute Verdüsung zu gewährleisten, muß das Reaktionsgemisch so niedrigviskos wie möglich eingestellt werden und zweckmäßigerweise eine Viskosität unter 400 m.Pa.s besitzen. Eine gewisse Viskositätserniedrigung kann in herkömmlichen Verfahren durch Erwärmen der Ausgangskomponenten, beispielsweise auf Temperaturen von 30 bis 80°C, erreicht werden. Durch die Temperaturerhöhung wird jedoch die Topfzeit der Reaktionsmischung erheblich verkürzt. Um ein Zusetzen der Mischaggregate und Düsen zu verhindern, dürfen die heißen, flüssigen Reaktionsgemische von der Vermischung bis zum Austritt aus der Düse keinen nennenswerten Viskositätsanstieg durch die beginnende Reaktion zeigen und müssen eine Topfzeit von mindestens 30 Sek. aufweisen.

Beim Austritt aus der Mischkammer wird das Reaktionsgemisch mit Luft versetzt und dadurch tröpfchenförmig verdüst. Durch die zugeführte Luft wird die Reaktionsmischung abgekühlt und die Topfzeit verlängert.

Wird ein Reaktionsgemisch, beispielsweise ein Zweikomponenten-Polyurethan-System, nach dem beschriebenen Verfahren auf senkrecht stehende Wände von Formwerkzeugen gespritzt, so kommt es durch die langsame Reaktion bei Raumtemperatur bei Schichtdicken von 0,3 mm und größer zu einem unerwünschten Ablaufen des Reaktionsgemisches von den Formwandungen. Speziell bei senkrechten Flächen, bei Hinterschnitten oder scharfen Kanten bilden sich vor Einsetzen der Härtungsphase unerwünschte "Tropfnasen". Soll ein Ablaufen oder eine "Tropfnasenbildung" der augespritzten Reaktionsgemischschicht verhindert werden, so müssen in mehreren Spritzgängen jeweils relativ dünne Schichten aufgespritzt und zwischengetrocknet werden. Ein derartiges Verfahren ist arbeitsintensiv und dadurch kostspielig.

Die Aufgabe der vorliegenden Erfindung bestand darin, die obengenannten Nachteile ganz zu beseitigen oder zumindest zu verbessern und mindestens zwei miteinander reagierende Komponenten, vorzugsweise organische Polyisocyanate und Verbindungen mit mindestens zwei reaktiven Wasserstoffatomen, intensiv zu mischen und mit Hilfe von Luft so zu verdüsen, daß ein gleichmäßiger Auftrag der Reaktionsmischung gewährleistet und ein Ablaufen bzw. eine Tropfnasenbildung verhindert wird.

Gegenstand der Erfindung ist somit ein Verfahren zum Herstellen von zelligen oder kompakten Kunststoffen aus mindestens zwei miteinander reagierenden Komponenten, bei dem die Komponenten getrennt einer Mischzone zugeführt, in der Mischzone miteinander vermischt und anschließend aus der Mischzone ausgetragen werden, wobei eine Zugabe von Luft erfolgt, das dadurch gekennzeichnet ist, daß die Luft auf eine Temperatur von ungefähr 100°C bis 1200°C erwärmt und mit dem aus der Mischzone austretenden Komponentengemisch zusammengeführt wird.

Nach bevorzugten Ausführungsformen wird die Luft auf 200 bis 400°C und insbesondere 280 bis 320°C erwärmt.

Die erwärmte Luft wird üblicherweise unter einem Druck von 0,5 bis 10 bar, vorzugsweise 2 bis 5 bar und insbesondere 2,5 bis 3,2 bar zugeführt.

Unter den erfindungsgemäßen Reaktionsbedingungen wird das Reaktionsgemisch gleichmäßig vernebelt und in einem gezielt gebündelten Strahl aufgetragen. Ein Verstopfen der Düsen wurde nicht beobachtet. Durch die zunächst in der Mischzone sehr langsame, nach Zuführung der erhitzten Luft beschleunigte Bildung der Polyadditionsprodukte erfolgt ein rascher Viskositätsanstieg, der ein Verlaufen begünstigt, jedoch ein Ablaufen an senkrechten Flächen sowie eine Tropfnasenbildung verhindert. Der gebildete Film zeigt einen gleichmäßigen Verlauf.

Das erfindungsgemäße Verfahren eignet sich zum Versprühen von beliebigen Formulierungen aus mindestens zwei reaktiven Komponenten, die nach dem Isocyanat-Polyadditionsverfahren hochmolekulare, vorzugsweise Harnstoff- und/oder insbesondere Urethangruppen enthaltende Kunststoffe bilden.

Vorzugsweise Anwendung findet das erfindungsgemäße Verfahren zum Herstellen von Polyurethanüberzügen durch Umsetzung von

a) organischen, gegebenenfalls modifizierten Polyisocyanaten mit
b) höhermolekularen Polyhydroxylverbindungen und gegebenenfalls
c) niedermolekularen Kettenverlängerungsmitteln und/oder Vernetzern in Gegenwart von
d) Katalysatoren und gegebenenfalls
e) Lösungsmitteln,
f) Hilfsmitteln und/oder Zusatzstoffen,

bei dem man die Komponenten (a) und die gegebenenfalls vereinigten Komponenten (b) bis (f) getrennt einer Mischzone zuführt, in der Mischzone miteinander vermischt und anschließend aus der Mischzone austrägt, wobei eine Zugabe von Luft erfolgt und das dadurch gekennzeichnet ist, daß die Luft eine Temperatur von 100 bis 1200°C, vorzugsweise von 200 bis 400°C und insbesondere von 280 bis 320°C besitzt und mit dem aus der Mischzone austretenden Komponentengemisch zusammengeführt wird.

Wie bereits dargelegt wurde, wird die erwärmte Luft üblicherweise unter einem Druck von 0,5 bis 10 bar, vorzugsweise 2 bis 5 bar und insbesondere 2,5 bis 3,2 bar zugeführt.

Zu den für das erfindungsgemäße Verfahren verwendbaren Ausgangskomponenten ist folgendes auszuführen:

(a) Erfindungsgemäß verwendbar organische Polyisocyanate besitzen die Formel $R(NCO)_n$, worin R mehrwertige, gegebenenfalls urethan-, biuret-, carbodiimid- und/oder isocyanuratgruppenhaltige aliphatische, cycloaliphatische, araliphatische oder vorzugsweise aromatische Reste oder gemischte Reste dieser Art und n eine ganze Zahl bedeuten, deren Wert der Valenzzahl von R entspricht und wenigstens 2, beispielsweise 2 bis 6 und vorzugsweise 2 bis 3 beträgt. Im einzelnen seien beispielhaft genannt: aliphatische Diisocyanate, wie Ethylendiisocyanat, Propylen-1,2-diisocyanat, Butylen-1,4-diisocyanat, 2,2,4 - Trimethylhexamethylen - 1,6 - diisocyanat, 2 - Methyl - pentamethylen - 1,5 - diisocyanat, 2 - Ethyl - butylen - 1,4 - diisocyanat und vorzugsweise Hexamethylen - 1,6 - diisocyanat, cycloaliphatische Diisocyanate, wie Cyclohexan - 1,2 - diisocyanat, Cyclohexan - 1,4 - diisocyanat, 1 - Methyl - cyclohexan - 2,4- und 2,6 - diisocyanat sowie die entsprechenden Isomerengemische, 4,4'-, 2,4'- und 2,2' - Dicyclohexylmethan - diisocyanat sowie die entsprechenden Isomerengemische und vorzugsweise 3 - Isocyanatomethyl - 3,5,5 - trimethylcyclohexylisocyanat und Polyisocyanate, wie Polycyclohexyl - polymethylen - polyisocyanate mit 2 bis 6, vorzugsweise 3 Cyclohexylenresten im Molekül und vorzugsweise aromatische Polyisocyanate wie m- oder p - Phenylen - diisocyanat, Biphenyl - diisocyanat, 2,4- und 2,6 - Toluylen - diisocyanat und die entsprechenden Isomerengemische, 4,4'-, 2,4'- und 2,2' - Diphenylmethan - diisocyanat und die entsprechenden Isomerengemische, Mischungen aus 4,4'-, 2,4'- und 2,2' - Diphenylmethan - diisocyanaten und Polyphenyl - polymethylen - polyisocyanaten (Roh-MDI) und Mischungen aus Roh-MDI und Toluylen-diisocyanaten.

Häufig werden auch sogenannte modifizierte mehrwertige Isocyanate, d.h. Produkte, die durch chemische Umsetzung obiger Di- und/oder Polyisocyanate erhalten werden, verwendet. Beispielhaft genannt seien Ester-, Harnstoff-, Biuret-, Allophanat- und vorzugsweise Carbodiimid-, Isocyanurat- und/oder Urethangruppen enthaltende Di- und/oder Polyisocyanate. Im einzelnen kommen beispielsweise in Betracht: Urethangruppen enthaltende aromatische Polyisocyanate mit NCO-Gehalten von 33,6 bis 15 Gew.-%, vorzugsweise von 31 bis 21 Gew.-%, beispielsweise mit niedermolekularen Diolen, Triolen, Dialkylenglykolen, Trialkylenglykolen oder Polyoxyalkylenglykolen mit Molekulargewichten bis 800 modifiziertes 4,4' - Diphenylmethan - diisocyanat oder Toluylendiisocyanat, wobei als Di- bzw. Polyoxyalkylenglykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 21 bis 9 Gew.-%, vorzugsweise von 21 bis 14 Gew.-%. Bewährt haben sich ferner flüssige Carbodiimidgruppen und/oder Isocyanuratringe enthaltende Polyisocyanate mit NCO-Gehalten von 33,6 bis 15, vorzugsweise 31 bis 21 Gew.-%, z.B. auf Basis von 4,4'-, 2,4'- und/oder 2,2' - Diphenylmethan - diisocyanat und/oder 2,4- und/oder 2,6 - Toluylen - diisocyanat und insbesondere 2,4- und 2,6 - Toluylen - diisocyanat sowie die entsprechenden Isomerengemische, 4,4'-, 2,4'- und 2,2' - Diphenylmethan - diisocyanat sowie die entsprechenden Isomerengemische z.B. aus 4,4'- und 2,4' - Diphenylmethan - diisocyanaten, Mischungen aus Diphenylmethan - diisocyanaten und Polyphenyl - polymethylen - polyisocyanaten (Roh-MDI) und Gemische aus Toluylen - diisocyanaten und Roh-MDI.

Vorzugsweise kommen jedoch zur Anwendung: Urethangruppen, Carbodiimidgruppen und/oder Isocyanuratringe enthaltende Polyisocyanate, z.B. auf Diphenylmethan-diisocyanat- und/oder Toluylendiisocyanat-Basis, Toluylen-diisocyanate, Mischungen aus Roh-MDI und Toluylen-diisocyanaten und insbesondere Mischungen aus 4,4'- und 2,4' - Diphenylmethan - diisocyanaten oder Mischungen aus den Diphenylmethan - diisocyanat - Isomeren und Polyphenyl - polymethylen - polyisocyanaten.

(b) Als höhermolekulare Polyhydroxylverbindungen werden zweckmäßigerweise solche mit einer Funktionalität von 2 bis 6, vorzugsweise 2 bis 3 und einem Molekulargewicht von 800 bis 8000, vorzugsweise 1200 bis 6000 verwendet. Bewährt haben sich z.B. Polyether-polyole, Polyester-polyole, Polythioether-polyole, gegebenenfalls hydroxylgruppenhaltige Polyesteramide, hydroxylgruppenhaltige Polyacetale und hydroxylgruppenhaltige aliphatische Polycarbonate oder Mischungen aus mindestens zwei der genannten Polyhydroxylverbindungen. Vorzugsweise Anwendung finden Polyester-polyole und/oder Polyether-polyole und insbesondere Mischungen aus di- und trifunktionellen Polyether-polyolen mit Molekulargewichten von 800 bis 8000 im Gewichtsverhältnis 99:1 bis 40:60, vorzugsweise im Gewichtsverhältnis 90:10 bis 50:50.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20—35:35—50:20—32 Gew.-Teilen, und insbesondere Adipinsäure. Beispiele für zwei- und mehrwertige Alkohole, insbesondere Diole sind: Ethandiol, Diethylenglykol, 1,2- bzw. 1,3 - Propandiol, Dipropylenglykol, 1,4 - Butandiol, 1,5 - Pentandiol, 1,6 - Hexandiol, 1,10 - Decandiol, Glycerin und Trimethylolpropan. Vorzugsweise verwendet werden Ethandiol, Diethylenglykol, 1,4-Butandiol, 1,5 - Pentandiol, 1,6 - Hexandiol oder Mischungen aus mindestens zwei der genannten Diole, insbesondere Mischungen aus 1,4 - Butandiol, 1,5 - Pentandiol und 1,6 - Hexandiol. Eingesetzt werden können ferner Polyester-polyole aus Lactonen, z.B. ε-Caprolacton, oder Hydroxycarbonsäuren, z.B. ω - Hydroxycapronsäure.

Die Polyesterpolyole besitzen vorzugsweise eine Funktionalität von 2 bis 3 und ein Molekulargewicht von 800 bis 3000 und vorzugsweise 1800 bis 2500.

Insbesondere als Polyhydroxylverbindungen verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren an ein Startermolekül, das 2 bis 6, vorzugsweise 2 bis 3, reaktive Wasserstoffatome gebunden enthält, oder durch kationische Polymerisation mit Lewis-Säuren, wie Antimonpentachlorid, Borfluorid-etherat u.a. oder Bleicherde als Katalysatoren aus einem oder mehreren Alkylenoxiden mit 2 bis 4 Kohlenstoffatomen im Alkylenrest, hergestellt werden.

Geeignete Alkylenoxide sind beispielsweise Tetrahydrofuran, 1,3 - Propylenoxid, 1,2- bzw. 2,3 -

4

Butylenoxid, Styroloxid, Epichlorhydrin und vorzugsweise Ethylenoxid und 1,2 - Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N' - dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3 - Propylendiamin, 1,3- bzw. 1,4 - Butylendiamin, 1,2-, 1,3-, 1,4-, 1,5- und 1,6 - Hexamethylendiamin, Phenylendiamine, 2,4- und 2,6 - Toluylendiamin und 4,4'-, 2,4'- und 2,2' - Diamino - diphenylmethan.

Als Startermoleküle kommen ferner in Betracht Alkanolamine, wie Ethanolamin, Diethanolamin, N-Methyl- und N-Ethyl-ethanolamin, N-Methyl- und N-Ethyl-diethanolamin und Triethanolamin, Ammoniak und Hydrazin. Vorzugsweise verwendet werden mehrwertige, insbesondere zwei- und/oder dreiwertige Alkohole, wie Ethandiol, Propandiol 1,2 und -1,3, Diethylenglykol, Dipropylenglykol, Butandiol-1,4, Hexandiol-1,6, Glycerin, Trimethylol-propan, Pentaerythrit und Sorbit.

Die Polyether-polyole besitzen vorzugsweise eine Funktionalität von 2 bis 3 und Molekulargewichte von 800 bis 8000, vorzugsweise 1200 bis 6000 und insbesondere 1800 bis 4000. Sie können ebenso wie die Polyester-polyole einzeln oder in Form von Mischungen verwendet werden. Ferner können sie mit den Polyester-polyolen sowie den hydroxylgruppenhaltigen Polyacetalen, Polycarbonaten und/oder Polyesteramiden gemischt werden.

Als hydroxylgruppenhaltige Polyacetale kommen z.B. die aus Glykolen, wie Diethylenglykol, Triethylenglykol, 4,4' - Dihydroxyethoxy - diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol - (1,4) und/oder Hexandiol - (1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

c) Zur Herstellung der Polyurethan-Überzüge können gegebenenfalls Kettenverlängerungsmittel und/oder Vernetzer mitverwendet werden. Zur gezielten Einstellung bestimmter mechanischer Eigenschaften, wie z.B. der Härte, eignen sich di- bis- tetrafunktionelle, vorzugsweise difunktionelle Verbindungen mit Molekulargewichten von 60 bis 600, vorzugsweise 60 bis 300 als Kettenverlängerungsmittel und/oder Vernetzer. Vorzugsweise Verwendung finden aliphatische, cycloaliphatische oder araliphatische Diole mit 2 bis 14, vorzugsweise 4 bis 10 Kohlenstoffatomen, Triole mit 3 bis 6 Kohlenstoffatomen und/oder Alkanolamine zweckmäßigerweise mit Molekulargewichten von 60 bis 300. Allein oder im Gemisch mit Diolen und/oder Triolen verwendbar sind auch beispielsweise N,N' - dialkylsubstituierte aromatische Diamine, die gegebenenfalls am aromatischen Kern durch Alkylreste substituiert sein können, mit 1 bis 10 Kohlenstoffatomen im N-Alkylrest wie z.B. N,N' - Diethyl-, N,N' - Di - sek - decyl-, N,N' - Dicyclohexyl - p- bzw. -m-phenylendiamin, N,N' - Dimethyl-, N,N' - Diethyl- und N,N' - Diisopropyl - 4,4' - diaminodiphenylmethan oder/und substituierte primäre aromatische Diamine und/oder höherwertige Polyamine, die in ortho-Stellung zu den Aminogruppen mindestens einen Alkylsubstituenten besitzen, welcher die Reaktivität der Aminogruppe durch sterische Hinderung vermindert und die bei Raumtemperatur flüssig und mit der Komponente (b) unter den Verarbeitungsbedingungen ganz oder zumindest teilweise mischbar sind, wie z.B. 1 - Methyl - 3,5 - diethyl - 2,4 - phenylendiamin, 2,4 - Dimethyl - 6 - tert.butyl - 1,3 - phenylendiamin und/oder 3,3',5,5' - Tetraisopropyl - 4,4' - diamino - diphenylmethan. Als geeignete Diole oder Triole seien beispielsweise genannt: Ethylenglykol, Propandiol-1,3 bzw. -1,2, Decandiol-1,10, o-, m-, p-Dihydroxycyclohexan, Diethylenglykol, Dipropylenglykol, 1,2,4-, 1,3,5 - Trihydroxycyclohexan, Glycerin und Trimethylolpropan sowie niedermolekulare Polyoxyalkylen-polyole auf Basis Ethylen- und/oder 1,2 - Propylenoxid und den vorgenannten Diolen und/oder Triolen als Startermoleküle und vorzugsweise Butandiol - 1,4, Hexandiol - 1,6 und Bis - (2 - hydroxyethyl)-hydrochinon.

Als Alkanolamin haben sich beispielsweise bewährt: Ethanolamin, Diethanolamin, Triethanolamin, N-Methyldiethanolamin, Di - propanolamin, Tripropanolamin, Hexanolamin, Dihexanolamin und Trihexanolamin.

Sofern Kettenverlängerungsmittel und/oder Vernetzer sowie deren Mischungen beim erfindungsgemäßen Verfahren mitverwendet werden, kommen diese in Mengen von 0 bis 22 Gew.-%, vorzugsweise von 1 bis 15 Gew.-%, bezogen auf das Gewicht der höhermolekularen Polyhydroxylverbindungen (b) zum Einsatz.

(d) Als Katalysatoren (d) haben sich beispielsweise tertiäre Amine bewährt, wie z.B. Triethylamin, Tributylamin, Dimethylbenzylamin, N-Methyl-, N-Ethyl-, N-Cyclohexylmorpholin, N,N,N',N' - Tetramethylethylendiamin, N,N,N',N' - Tetramethyl - butandiamin, Pentamethyl - diethylentriamin, Tetramethyl - diaminoethylether, Bis - (dimethylaminopropyl) - harnstoff, Dimethylpiperazin, 1,2 - Dimethylimidazol, 1 - Azabicyclo - (3,3,0) - octan und vorzugsweise 1,4 - Diaza - bicyclo - (2,2,2) - octan und Alkanolamin-

5

verbindungen, wie Triethanolamin, Triisopropanolamin, N-Methyl- und N - Ethyl - diethanolamin und Dimethylethanolamin.

Insbesondere bewährt haben sich jedoch und daher vorzugsweise verwendet werden als Katalysatoren (d) organische und/oder anorganische Metallverbindungen, die erst bei Temperaturen über 40°C, vorzugsweise zwischen 60 und 160°C ihre volle katalytische Wirksamkeit entfalten. Als Beispiele für derartige organische und anorganische Metallverbindungen seien genannt: anorganische Metallsalze wie z.B. die Chloride des zwei- und dreiwertigen Eisens, drei- und vierwertigen Zinns, Zinks, Cadmiums und zweiwertigen Quecksilbers, Metallcarbonyle wie Eisen- oder Nickelcarbonyl und organische Komplex- oder Chelatverbindungen, wie sie z.B. aus Acetylaceton, Benzoylaceton, Trifluoracetylaceton, Acetessigester, Salicylaldehyd oder Cyclopentanon - 2 - carbonsäureethylester einerseits und den verschiedenen Metallen wie Beryllium, Magnesium, Kupfer, Zink, Cadmium, Quecksilber, Titan, Zirkon, Zinn, Vanadium, Antimon, Chrom, Molybdän, Wolfram, Mangan, Eisen, Kobalt, Nickel oder Metalloxidverbindungen wie $MoO_2^{2+}$, $VO^{2-}$ andererseits erhalten werden können, wobei auch partiell substituierte Metallkomplexe wie Dioctylzinndilaurat, $SnCl_2$(acetylacetonat) oder $SbCl_4$(acetylacetonat) in Betracht kommen. Bei der Komplexbildung können ferner anstelle der genannten Ketoverbindung als Komplexbildner die entsprechenden Imine wie z.B. Acetylacetonimine, Bis-acetylaceton-alkylen-diimine, Salicylaldehydimine u.a. eingesetzt werden. Geeignet sind ferner Metallkomplexe der Porphyrine, Porphyrazine oder Phenolate. Vorzugsweise Anwendung finden die Acetylactonate von Eisen, Kobalt, Zirkon, Mangan, Vanadium, Zink, Zinn, Antimon und Titan. Die verwendete Katalysatormenge ist abhängig von dessen Wirksamkeit; sie soll einerseits eine ausreichende Filmbildung gewährleisten und andererseits zu keinem zu raschen Viskositätsanstieg, verbunden mit Verstopfungen der Leitungssysteme führen. Bewährt haben sich beispielsweise Mengen an Katalysator oder Katalysatorkombination von 0,001 bis 5 Gew.-%, vorzugsweise 0,05 bis 2 Gew.-%, bezogen auf das Gewicht der Polyhydroxylverbindung (b).

Der Reaktionsmischung können gegebenenfalls auch noch Lösungsmittel (e) und Hilfsmittel und/oder Zusatzstoffe (f) einverleibt werden.

(e) Zur Herstellung von Polyurethanüberzügen nach dem erfindungsgemäßen Verfahren werden die Aufbaukomponenten vorzugsweise in Abwesenheit von organischen Lösungsmitteln miteinander umgesetzt. Gegebenenfalls kann es jedoch zweckmäßig sein, die Reaktionsmischung zur Erniedrigung der Viskosität mit einem inerten Lösungsmittel (e) zu verdünnen. Als inerte Lösungsmittel eignen sich beispielsweise Aromaten, wie Benzol, Toluol oder Xylol, Ketone, wie Aceton oder Methylethylketon, Ester, wie Butyl- oder Ethylacetat, Ether wie Tetrahydrofuran oder Dioxan und Dimethylformamid sowie Mischungen von derartigen Lösungsmitteln. Die Art und Menge des Lösungsmittels wird zweckmäßigerweise so gewählt, daß die erhitzte Luft das Lösungsmittel zumindest teilweise, vorzugsweise jedoch vollständig, verdampfen läßt, bevor die versprühte Reaktionsmischung sich an der Formwandung niederschlägt.

(f) Wie bereits dargelegt wurde, können der Reaktionsmischung auch Hilfsmittel und/oder Zusatzstoffe einverleibt werden. Genannt seien beispielsweise oberflächenaktive Substanzen, Füllstoffe, Farbstoffe, Pigmente, Flammschutzmittel, Hydrolyseschutzmittel, fungistatisch und bakteriostatisch wirkende Substanzen. Nähere Angaben über die obengenannten und andere übliche Hilfsmittel und Zusatzstoffe sind der Fachliteratur, beispielsweise der Monographie von J. H. Saunders und K. C. Frisch "High Polymers", Band XVI, Polyurethanes, Teil 1 und 2, Verlag Interscience Publishers 1962 bzw. 1964 oder dem Kunststoff-Handbuch, Band VII, Polyurethane, 1. und 2. Auflage, Carl Hanser Verlag, München, 1966 und 1983, zu entnehmen.

Zum Verdüssen der fließfähigen Reaktionsmischung wird beim erfindungsgemäßen Verfahren aus Kostengründen zweckmäßigerweise Luft verwendet. Unter Luft sind jedoch im Sinne der Erfindung auch andere Gase, vorzugsweise unter den Reaktionsbedingungen inerte Gase zu verstehen, wie z.B. Stickstoff, Helium, Neon und andere Edelgase oder deren Gemische, wobei insbesondere bei Temperaturen über 700°C anstelle von Luft Stickstoff eingesetzt wird.

Zur Herstellung der Polyurethan-Überzüge werden die organischen Polyisocyanate (a), höhermolekularen Polyhydroxylverbindungen (b) und gegebenenfalls niedermolekularen Kettenverlängerungsmittel und/oder Vernetzer (c) in solchen Mengen zur Umsetzung gebracht, daß das Äquivalenzverhältnis von NCO-Gruppen der Polyisocyanate (a) zur Summe der reaktiven Wasserstoffatome der Komponenten (b) und gegebenenfalls (c) 1:0,85 bis 1,25, vorzugsweise 1:0,95 bis 1,15 und insbesondere 1:0,98 bis 1,05 beträgt.

Bei Verwendung einer Mischkammer mit mehreren Zulaufdüsen können die Ausgangskomponenten einzeln zugeführt und in der Mischkammer (Mischzone) intensiv vermischt werden. Als besonders vorteilhaft hat es sich erwiesen nach dem Zweikomponenten-Verfahrens zu arbeiten und die Komponenten (b), (d) und gegebenenfalls (c), (e) und (f) in der Komponente (A) zu vereinigen und als Komponente (B) die organischen Polyisocyanate (a) zu verwenden. Um eine Reaktionsmischung mit einer relativ langen offenen Zeit, in der Regel liegt diese vorteilhafterweise zwischen 30 und 60 Sekunden, zu erhalten, werden die Aufbaukomponenten vorzugsweise bei Temperaturen von 18 bis 30°C gemischt. Es ist jedoch auch möglich, einzelne oder alle Ausgangskomponenten zu erwärmen, wobei jedoch Temperaturen über 60°C zweckmäßigerweise vermieden werden. Das aus der Mischzone austretende Reaktionsgemisch, das bei 25°C üblicherweise eine Viskosität von ungefähr 50 bis 15000 m.Pa.s, vorzugsweise von 80 bis 4000 m.Pa.s. besitzt, wird mit erhitzter Luft zusammengeführt und mittels einer Spritzdüse versprüht. Bei Verwendung einer Düse mit einem Öffnungsdurchmesser von 1,5 mm und mit 3,5 bar zugeführter Luft beträgt die Austragsleistung der Spritzapparatur ungefähr 100 bis 600 g/Minute. Durch die feine Zerstäubung des Reaktionsgemisches mit erhitzter Luft wird dieses gleichzeitig praktisch schlagartig aufgeheizt. Es tritt eine erhebliche Viskositätserniedrigung des Reaktionsgemisches ein und bedingt dadurch ein Spritzbild von intensiver Feinheit. Zum anderen erfolgt durch die Wärmezufuhr mit der erhitzten Luft ein sofortiger Start der Polyadditionsreaktion und gegebenenfalls ein Verdunsten des Lösungsmittels. Durch die rasche Viskositätszunahme wird erreicht, daß das verdüste Reaktionsgemisch beim Auftreffen auf die zu besprühende Fläche bereits soweit anreagiert, daß auch bei der Ausbildung dickerer Schichten, z.B. von 0,3 bis 2 mm und mehr, kein Ablaufen mehr erfolgt und andere nachteilige Erscheinungsbilder, z.B. die Tropfnasenbildung, nicht auftreten.

Das erfindungsgemäße Verfahren wird durch die Beispiele näher erläutert.

Beispiel 1
A-Komponente: Mischung aus
> 86,7 Gew.—Teilen eines 1,4-Butandiol-1,5-pentandiol-1,6-hexandiol-polyadipats mit einer Hydroxyzahl von 56,
> 8,0 Gew.—Teilen Butandiol-1,4,
> 1,0 Gew.—Teilen Triethylendiamin (33 gew.%ige Lösung in Diethylenglykol),
> 4,0 Gew.—Teilen Zeolithpaste und
> 0,3 Gew.—Teilen Silikonöl als Entschäumer.

B-Komponente:
Mit Dipropylenglykol modifiziertes 4,4'-Diphenylmethan-diisocyanat mit einem NCO-Gehalt von 23 Gew.-% und einer Viskosität von 700 m.Pa.s bei 25°C.

100 Gew.—Teile der A-Komponente und 54 Gew.—Teile der B-Komponente—entsprechend einem Isocyantindex von 104—wurden bei 25°C über eine Zahnradgruppe, deren Förderleistung drehzahlabhängig durch einen Stellmotor gesteuert werden kann, der Mischzone zugeführt. Die Vermischung der Komponenten erfolgte in einer Niederdruckmaschine der Firma Spritztechnik AG, Schweiz, die als Mischpistole ausgebildet war. Die Mischpistole besaß einen durch Luftmotor angetriebenen mechanischen Rührer und eine Spritzdüse mit Außenmischung.

Die Spritzluft wurde über einen Wärmeaustauscher auf 370°C erhitzt und mit einem Druck von 3,3 bar zugeführt. Die erhitzte Luft wurde nach der Mischkammer dem ausgetragenen Reaktionsgemisch in der Spritzdüse einverleibt. Der Luftverbrauch betrug 350 l/Minute, die Austragsleistung lag bei ungefähr 420 g/Minute.

Die Spritzfläche wurde aus einer Entfernung von 0,3 bis 0,8 m unter einem Spritzwinkel von 0 bis 70° besprüht.

Beispiel 2
Man verfuhr analog Beispiel 1, verwendete jedoch als A-Komponente eine Mischung aus
> 60,3 Gew.—Teilen eines Polyoxypropylen-polyoxethylen-glykols mit der Hydroxylzahl 29,
> 20,0 Gew.—Teilen eines Polyoxyalkylen-triols, hergestellt aus Trimethylolpropan als Startermolekül und 1,2-Propylenoxid/Ethylenoxid mit der Hydroxylzahl 27,
> 10,0 Gew.—Teilen Butandiol-1,4,
> 1,2 Gew.—Teilen Triethylen-diamin (33 gew.%ige Lösung in Diethylenglykol),
> 0,1 Gew.—Teilen Dioctylzinndilaurat und
> 5,0 Gew.—Teilen Zeolithpaste

und als B-Komponente eine mit Urethangruppen modifizierte Mischung aus Diphenylmethandiisocyanaten und Polyphenyl-polymethylen-polyisocyanaten mit einem NCO-Gehalt von 28 Gew.-% und einer Viskosität von 170 m.Pa.s bei 25°C.

Die A- und B-Komponente wurden im Gewichtsverhältnis 100:40, entsprechend einem Isocyanatindex von 110 gemischt.

Beispiel 3
A-Komponente: Mischung aus
> 51,0 Gew.—Teilen eines Gemisches aus einem Cyclohexanonkondensationsprodukt und Ricinusöl mit einer Hydroxylzahl von 165,
> 15,0 Gew.—Teilen eines tetrafunktionellen Polyoxypropylen-polyols mit einer Hydroxylzahl von 470, hergestellt unter Verwendung von Ethylendiamin als Startermolekül,
> 0,15 Gew.—Teilen Dioctylzinndilaurat,
> 3,0 Gew.—Teilen Zeolithpaste,
> 0,3 Gew.—Teilen Silikonöl,
> 22,7 Gew.—Teilen Bariumsulfat,
> 5,0 Gew.—Teilen Eisenoxidschwarz und
> 2,8 Gew.—Teilen Siliciumoxid.

B-Komponente:
Urethangruppen enthaltendes Polyisocyanatgemisch mit einem NCO-Gehalt von 25,5 Gew.—%, hergestellt durch Umsetzung einer Mischung aus Diphenylmethan - diisocyanaten und Polyphenyl - polymethylen - polyisocyanaten mit einem Polyoxypropylen - polyoxyethylen - glykol der Hydroxylzahl 29.

Die A- und B-Komponente wurden im Gewichtsverhältnis von 100:48 Teilen, entsprechend einem Isocyanatindex von 110, gemischt.

Das Verspritzen erfolgte analog den Angaben von Beispiel 1.

**Patentansprüche**

1. Verfahren zum Herstellen von zelligen oder kompakten Kunststoffen aus mindestens zwei miteinander reagierenden Komponenten, bei dem die Komponenten getrennt einer Mischzone zugeführt, in der Mischzone miteinander vermischt und anschließend aus der Mischzone ausgetragen werden, wobei eine Zugabe von Luft erfolgt, dadurch gekennzeichnet, daß die Luft auf eine Temperatur von etwa 100°C bis etwa 1200°C erwärmt und mit dem aus der Mischzone austretenden Komponentengemisch zusammengeführt wird.

2. Verfahren nach Anspruch 1, dadurch gekennzeichnet, daß die Luft unter einem Druck von 0,5 bis 10 bar zugeführt wird.

3. Verfahren nach Anspruch 1, dadurch gekennzeichnet, daß die Luft eine Temperatur on 200 bis 400°C besitzt und unter einem Druck von 2,0 bis 5,0 bar zugeführt wird.

4. Verfahren zur Herstellung von Polyurethanüberzügen durch Umsetzung von
a) organischen, gegebenenfalls modifizierten Polyisocyanaten mit
b) höhermolekularen Polyhydroxylverbindungen und gegebenenfalls
c) niedermolekularen Kettenverlängerungsmitteln und/oder Vernetzern in Gegenwart von
d) Katalysatoren und gegebenenfalls
e) Lösungsmitteln,
f) Hilfsmitteln und/oder Zusatzstoffen,
bei dem man die Komponenten (a) und die gegebenenfalls vereinigten Komponenten (b) bis (f) getrennt einer Mischzone zuführt, in der Mischzone miteinander vermischt und anschließend aus der Mischzone austrägt, wobei eine Zugabe von Luft erfolgt, dadurch gekennzeichnet, daß die Luft eine Temperatur von 100 bis 1200°C besitzt und mit dem aus der Mischzone austretenden Komponentengemisch zusammengeführt wird.

5. Verfahren nach Anspruch 4, dadurch gekennzeichnet, daß die Luft unter einem Druck von 0,5 bis 10 bar zugeführt wird.

6. Verfahren nach Anspruch 4, dadurch gekennzeichnet, daß die Luft eine Temperatur von 200 bis 400°C besitzt und unter einem Druck von 2,0 bis 5,0 bar zugeführt wird.

7. Verfahren nach Anspruch 4, dadurch gekennzeichnet, daß als organische Polyisocyanate (a) aromatische und/oder modifizierte Urethan-, Isocyanurat- und/oder Carbodiimidgruppen enthaltende aromatische Polyisocyanate verwendet werden.

8. Verfahren nach Anspruch 4, dadurch gekennzeichnet, daß als höhermolekulare Polyhydroxylverbindungen di- und trifunktionelle Polyetherpolyole mit Molekulargewichten von 800 bis 8000 oder insbesondere deren Gemische verwendet werden.

9. Verfahren nach Anspruch 4, dadurch gekennzeichnet, daß man als Katalysatoren (d) organische oder anorganische Metallverbindungen verwendet, die erst bei Temperaturen über 40°C ihre volle katalytische Wirksamkeit entfalten.

10. Verfahren nach Anspruch 4, dadurch gekennzeichnet, daß man die Umsetzung in Abwesenheit von organischen Lösungsmitteln durchführt.

**Revendications**

1. Procédé de préparation de matières plastiques cellulaires ou compactes à partir d'au moins deux composants qui réagissent l'un avec l'autre, dans lequel les composants sont introduits séparément dans une zone de mélange, sont mélangés entre eux dans la zone de mélange, puis sont extraits de la zone de mélange, une addition d'air étant effectuée, caractérisé en ce que l'air est chauffe à une température d'environ 100°C à environ 1200°C et est réuni au mélange de composants qui sort de la zone de mélange.

2. Procédé selon la revendication 1, caractérisé en ce que l'air est introduit sous une pression de 0,5 à 10 bars.

3. Procédé selon la revendication 1, caractérisé en ce que l'air est à une température de 200 à 400°C et est introduit sous une pression de 2,0 à 5,0 bars.

4. Procédé de préparation de couches de revêtement en polyuréthane par réaction de
a) polyisocyanates organiques éventuellement modifiés, avec
b) des composés polyhydroxyles de poids moléculaire très élevé et éventuellement
c) des agents d'allongement de chaîne de faible poids moléculaire et/ou des réticulants, en présence
d) de catalyseurs et éventuellement
e) de solvants,

f) d'adjuvants et/ou d'additifs,

dans lequel on introduit séparément dans une zone de mélange les composants (a) et les composants (b) à (f) éventuellement réunis, on les mélange entre eux dans la zone de mélange, puis on les extrait de la zone de mélange, en effectuant une addition d'air, caractérisé en ce que l'air est chauffé à une température de 100°C à 1200°C et est réuni au mélange de composants qui sort de la zone de mélange.

5. Procédé selon la revendication 4, caractérisé en ce que l'air est introduit sous une pression de 0,5 à 10 bars.

6. Procédé selon la revendication 4, caractérisé en ce que l'air est à une température de 200 à 400°C et est introduit sous une pression de 2,0 à 5,0 bars.

7. Procédé selon la revendication 4, caractérisé en ce qu'on utilise, comme polyisocyanates organiques (a), des polyisocyanates aromatiques et/ou modifiés, contenant des groupements uréthane, isocyanurate et/ou carbodiimide.

8. Procédé selon la revendication 4, caractérisé en ce qu'on utilisé, comme composés polyhydroxylés de poids moléculaire très élevé, des polyéther-polyols di- ou trifonctionnels ayant des poids moléculaires de 800 à 8000 ou, en particulier, des mélanges de ceux-ci.

9. Procédé selon la revendication 4, caractérisé en ce qu'on utilise, comme catalyseurs (d), des composés métalliques organiques ou inorganiques qui ne déploient leur pleine activité catalytique qu'à des températures de plus de 40°C.

10. Procédé selon la revendication 4, caractérisé en ce qu'on conduit la réaction en l'absence de solvants organiques.

**Claims**

1. A process for the preparation of cellular or compact plastics from at least two components reacting with each other, in which the components are fed separately into a mixing zone, mixed with one another, in the mixing zone and then discharged from the mixing zone, air being introduced, wherein the air is heated to a temperature of from about 100°C to about 1200°C and is combined with the component mixture emerging from the mixing zone.

2. A process as claimed in claim 1, wherein the air is fed in under from 0.5 to 10 bar.

3. A process as claimed in claim 1, wherein the air is at 200—400°C and is fed in under from 2.0 to 5.0 bar.

4. A process for the preparation of a polyurethane coating by reacting
   a) organic, modified or unmodified polyisocyanates with
   b) relatively high molecular weight hydroxy compounds and, if required,
   c) low molecular weight chain extenders and/or cross-linking agents in the presence of
   d) catalysts and, if required,
   e) solvents,
   f) assistants and/or additives,
   in which the components (a) and components (b) to (f), which may be combined, are fed separately into a mixing zone, mixed with one another in the mixing zone and then discharged from the mixing zone, air being introduced, wherein the air is at from 100 to 1200°C and is combined with the component mixture emerging from the mixing zone.

5. A process as claimed in claim 4, wherein the air is fed in under from 0.5 to 10 bar.

6. A process as claimed in claim 4, wherein the air is at 200—400°C and is fed in under from 2.0 to 5.0 bar.

7. A process as claimed in claim 4, wherein the organic polyisocyanates (a) used are aromatic polyisocyanates and/or modified aromatic polyisocyanates containing urethane, isocyanurate and/or carbodiimide groups.

8. A process as claimed in claim 4, wherein the relatively high molecular weight polyhydroxy compounds used are di- and trifunctional polyetherpolyols having molecular weights of from 800 to 8,000 or, in particular, mixtures thereof.

9. A process as claimed in claim 4, wherein the catalysts (d) used are organic or inorganic metal compounds which display their full catalytic activity only at about 40°C.

10. A process as claimed in claim 4, wherein the reaction is carried out in the absence of organic solvents.